# EUROPÄISCHE PATENTSCHRIFT

(11) **EP 1 854 590 B1**
(45) Veröffentlichungstag und Bekanntmachung des Hinweises auf die Patenterteilung: **29.09.2010**
(21) Anmeldenummer: 07008486.8
(22) Anmeldetag: 26.04.2007
(51) Int. Cl.: B25J 17/02, B23K 37/02

(54) **Knickarmroboter zum Tragen eines Brenners mit flexibler Brennergeometrie**
Jointed arm robot for carrying a burner with flexible burner geometry
Robot à bras articulé destiné à transporter un brûleur à géométrie de brûleur variable

(30) Priorität: 12.05.2006 DE 202006007733 U
(43) Veröffentlichungstag der Anmeldung: 14.11.2007
(73) Patentinhaber: Carl Cloos Schweisstechnik GmbH, 35708 Haiger (DE)
(72) Erfinder: Pittner, Stephan, 35767 Breitscheid (DE); Platz, Johannes, Dr., 35708 Haiger (DE)
(74) Vertreter: Lippert, Stachow & Partner

(56) Entgegenhaltungen:
- EP-A- 1 632 304
- EP-A1- 1 440 760
- WO-A-91/08856
- WO-A-2004/033141
- WO-A-2004/096485
- GB-A- 2 254 172
- JP-A- 9 216 189
- US-A- 4 933 531

## Beschreibung

Die Erfindung betrifft einen Knickarmroboter mit einem Dreharm, welcher eine Halteeinrichtung dreht, die sich vom Dreharm nach außen zur Seite erstreckt, wobei die Halteeinrichtung in einem ersten Abschnitt an dem Dreharm befestigt ist und in einem zum Dreharm seitlich entfernten, zweiten Abschnitt einen Brenner, wie einen Schweißbrenner mit einem Brennerkopf zur Bearbeitung eines Werkstückes trägt.

Derartige Knickarmroboter sind in einer Vielzahl von Automatisierungsanwendungen wie Fügeanwendungen, bei welchen Werkstücke durch eine Schweißnaht zusammengefügt werden, im Einsatz. Darüber hinaus können solche Roboter, welche einen Brenner als Werkzeug tragen auch für andere Fertigungsverfahren wie beispielsweise Trennverfahren benutzt werden. Den Robotern ist gemein, dass der Brenner durch die Befestigung am roboterseitigen Dreharm jeweils um diesen herum geführt werden kann. In der Regel wird eine 3-D-Bearbeitung von Werkstücken durchgeführt, sodass eine besonders hohe Beweglichkeit des Roboterarms gefordert ist, um eine möglichst flexible Brennerführung bereitzustellen. Insbesondere bei herkömmlichen Schweißrobotern in Knickarmausführung ist die bereitgestellte Dynamik der Brennerführung jedoch beschränkt. Dies gilt insbesondere in solchen Fällen, bei welchen neben dem Brenner noch Nebenaggregate, wie beispielsweise eine Sensoreinrichtung oder eine Drahtzufuhreinrichtung mit auf einer Bahn geführt werden. Häufig muss bei der Verwendung solcher herkömmlicher Knickarmroboter die Gestaltung oder die Geometrie der zu fügenden Teile an die Machbarkeit der Brennerbahnführung angepasst werden, welche durch den verwendeten Schweißroboter umgesetzt werden kann.

Die Offenlegungsschrift GB 2254172 A beschreibt einen Schweißroboter mit einem Dreharm, der eine Halteeinrichtung trägt, die sich vom Dreharm nach außen zur Seite erstreckt, wobei die Halteeinrichtung in einem ersten, dreharmnahen Abschnitt an dem Dreharm befestigt ist und in einem zum roboterseitigen Dreharm seitlich entfernten, zweiten Abschnitt einen Brenner, wie einen Schweißbrenner mit einem Brennerkopf zur Bearbeitung eines Werkstückes trägt, wobei brennerseitig an dem zweiten Abschnitt der Halteerinrichtung eine weitere Drehachse vorgesehen ist.

Der Erfindung liegt die Aufgabe zugrunde, einen gattungsgemäßen Knickarmroboter zum Halten eines Brenners so weiterzubilden, dass dieser eine flexiblere Brennergeometrie bereitstellen kann, mit der die angegebenen Nachteile herkömmlicher Knickarmroboter zum Halten von Brennern zumindest teilweise behoben sind.

Diese Aufgabe löst die Erfindung auf überraschend einfache Weise schon mit einem Knickarmroboter mit den Merkmalen von Anspruch 1. Dabei zeichnet sich der erfindungsgemäße Knickarmroboter zum Halten eines Brenners dadurch aus, dass eine Schwenkachse an der Halteeinrichtung vorgesehen ist zur Festlegung einer vorgegebenen Neigung zwischen dem ersten und dem zweiten Abschnitt der Halteeinrichtung, sowie eine lösbare Sperrvorrichtung zur Feststellung eines eingestellten Neigungswinkels zwischen dem ersten und zweiten Abschnitt, wobei die Schwenkachse senkrecht zur Ebene verläuft, welche durch die beiden Drehachsen aufgespannt ist. Eine derartige Gestaltung eines Knickarmroboters erlaubt eine flexiblere Brennergeometrien und ein leichtere Anpassung der Brennerführung an die jeweilige Schweißaufgabe.

Erfindungsgemäß ist die Neigung zwischen dem ersten und zweiten Abschnitt (Teil) der Halteeinrichtung einstellbar gestaltet. Dabei ist eine lösbare Sperrvorrichtung vorgesehen um einen eingestellten Neigungswinkel festzustellen. Dabei stellt die Halteeinrichtung des erfindungsgemäßen Knickarmroboters für den Brenner neben der weiteren Drehachse eine zusätzliche Schwenkachse bereit, mit welcher eine Verbesserung der Anpassung des erfindungsgemäßen Knickarmroboters an das jeweilige Bearbeitungsproblem erreicht wird. Erfindungsgemäß verläuft die Schwenkachse senkrecht zur Ebene, welche durch die roboterseitige Drehachse und die weitere Drehachse an der Halteeinrichtung aufgespannt wird. Der an dem Schwenkgelenk veränderte Winkel wirkt sich damit direkt um den gleichen Betrag beim Aktionswinkel zwischen der Achse des Brennerkopfs und der roboterseitigen Drehachse aus.

Dieser zusätzliche Freiheitsgrad durch die weitere Drehachse an dem zweiten Abschnitt der Halteeinrichtung kann beispielsweise dazu verwendet werden, den Brenner selbst zur Halteeinrichtung zu drehen oder bei starr zur Halteeinrichtung fixiertem Brenner Nebenaggregate wie eine Sensoreinrichtung oder eine Drahtzuführungseinrichtung um den Brenner herum in einer Kreisbahn zu führen. Wenn beispielsweise der roboterseitige Dreharm, dessen Drehachse parallel zum Arm verläuft, betätigt wird, um den Brenner an die Schweißstelle heranzuführen, kann die zusätzliche Drehachse dazu genutzt werden, den Brenner bzw. das Nebenaggregat optimal zur Schweißstelle zu orientieren. Die Erfindung ist insbesondere auch vorteilhaft, wenn der Brenner selbst nicht symmetrisch aufgebaut ist, beispielsweise im Falle eines Tandembrenners, der zwei Brenner bzw. Brennerköpfe ausweist. Eine Drehung des Tandembrenners zur Halteeinrichtung ermöglicht wiederum eine opti-male Ausrichtung des Werkzeugs zum Werkstück.

Es kann vorteilhaft sein, wenn die Brennerachse parallel zur weiteren Drehachse am zweiten Abschnitt der Halteeinrichtung verläuft.

Zweckmäßigerweise bilden die Drehachse des roboterseitigen Dreharms und die brennerseitige, weitere Drehachse einen spitzen Winkel zueinander. Dabei kann der Brennerkopf zur Brennerachse geneigt sein, sodass bei einer Drehung des Brenners in der Halteeinrichtung unterschiedliche Aktionswinkel eingestellt werden können, die durch den Winkel zwischen der Achse des Brennerkopfs und der roboterseitigen Drehachse definiert sind.

Bei dem erfindungsgemäß ausgebildeten Knickarmroboter ist es zweckmäßig, den sogenannten TCP-Punkt (Tool Center Point) als Schnittpunkt der roboterseitigen Drehachse mit der Achse des Brennerkopfs festzulegen. Um einen Schnittpunkt der beiden Achsen auch ohne eine besonders starke Neigung des Brennerkopfs zur Brennerachse zu ermöglichen, kann es zweckmäßig sein, wenn der zweite Abschnitt der Halteeinrichtung zum ersten Abschnitt geneigt verläuft, derart, dass der zweite Abschnitt in Richtung zum Brennerkopf geneigt ist. Dabei kann die Halteeinrichtung in dem ersten Abschnitt starr an dem roboterseitigen Dreharm befestigt sein und sich nach außen erstrecken sowie seitlich zur roboterseitigen Drehachse in den zweiten Abschnitt übergehen.

Erstreckt sich der erste Abschnitt der Halteeinrichtung im Wesentlichen senkrecht zum roboterseitigen Dreharm, d.h. radial nach außen, vergrößert sich der Aktionsbereich des Brenners. Die Halteeinrichtung kann dabei plattenförmig ausgebildet sein, wobei ferner die Brennerachse etwa senkrecht zum zweiten Abschnitt der Halteeinrichtung verlaufen kann.

Die entfernt zum roboterseitigen Dreharm an der Halteeinrichtung vorgesehene weitere Drehachse kann insbesondere durch eine Hohlwelle festgelegt sein, durch welche sich der Brenner, z.B. parallel zur Drehachse, erstreckt. Damit bietet sich einerseits die Möglichkeit, den Brenner starr mit der Hohlwelle zu verbinden, sodass dieser zur Halteeinrichtung gedreht wird, andererseits bietet sich damit auch die Möglichkeit, den Brenner feststehend zur drehenden Hohlwelle an der Halteeinrichtung direkt zu befestigen und mittels der Hohlwelle ein Nebenaggregat wie eine weitere Brennereinrichtung, eine Sensoreinrichtung oder auch eine Drahtvorschubeinrichtung zu drehen, sodass das Nebenaggregat insbesondere kreisförmig um den Brenner herum geführt werden kann. Der erfindungsgemäße Knickarmroboter ist demnach vielseitig einsetzbar und an das jeweilige Bearbeitungsproblem flexibel anpassbar, da er eine im Vergleich zu herkömmlichen Knickarmrobotern verbesserte Beweglichkeit des gehaltenen Brenners bereitstellt.

Wie oben stehend schon angegeben, kann es zweckmäßig sein, die Neigung der Halteeinrichtung zur roboterseitigen Drehachse auf die Orientierung der Brennerachse bzw. der Achse des Brennerkopfs abzustellen. Ist beispielsweise der Brennerkopf zur Brennerachse um etwa 35° geneigt, kann die Neigung des zweiten Abschnitts der Halteeinrichtung zum ersten Abschnitt auf etwa 10° gewählt sein, sodass sich ein vorteilhafter Aktionswinkel von 45° des Brennerkopfs zur Drehachse des roboterseitigen Dreharms ergibt. Eine besonders vorteilhafte flexible Einstellung des Aktionswinkels kann dadurch bereitgestellt werden, dass die Achse des Brennerkopfs zur Brennerachse und der zweite Abschnitt der Halteeinrichtung zum ersten Abschnitt jeweils um etwa 22,5° geneigt sind. Dadurch kann beispielsweise ein Aktionswinkel von 45° bereitgestellt werden und bei einer Drehung des Brenners um 180° um die an der Halteeinrichtung vorgesehenen weiteren Drehachse ein Aktionswinkel von 0°. Derartige Änderungen des Aktionswinkels können während des Betriebs eines erfindungsgemäß ausgebildeten Roboters durchgeführt werden.

Es kann zweckmäßig sein, wenn die Halteeinrichtung zur Befestigung des Brenners an einem Dreharm des Knickarmroboters zweiteilig ausgebildet ist. Dabei kann das erste Teil der Befestigung am roboterseitigen Dreharm dienen, während das zweite Teil zur Befestigung des Brenners ausgebildet ist.

Das Verstellen des Neigungswinkels zwischen dem ersten und zweiten Abschnitt der Halteeinrichtung kann je nach Ausführungsform manuell oder auch motorisch erfolgen. Dabei kann eine Verstelleinrichtung vorgesehen sein, welche einen Antrieb umfasst zum motorischen Verstellen der Neigung zwischen erstem und zweitem Abschnitt der Halteeinrichtung. Auf diese Weise kann eine weitere Roboterachse bereitgestellt werden, die je nach Ausführungsform direkt von der Robotersteuerung angesprochen werden kann. In einer besonderen Ausführungsform kann zumindest ein Ritzel an zwei Teilen der Halteeinrichtung vorgesehen sein, wobei eines der Ritzel starr mit dem ihm zugeordneten Teil verbunden ist und das andere Ritzel an dem anderen Teil der Halteeinrichtung motorisch angetrieben wird. Dabei ist es besonders zweckmäßig, wenn eines der beiden Ritzel zentrisch zur Schwenkachse angeordnet ist, sodass trotz der Schwenkbewegung der Abstand der Ritzel konstant bleibt.

Der erfindungsgemäße Knickarmroboter ist prinzipiell mit allen herkömmlichen Brennern verwendbar, wie beispielsweise einem MIG-MAG-Brenner, einem WIG-Brenner, einem Laserbrenner oder auch einem Plasma-Brenner. Wie dargestellt, zeigt sich der Vorteil insbesondere auch bei der Verwendung eines Brenners, der zu seiner Brennerachse nicht rotationssymmetrisch aufgebaut ist, wie beispielsweise einem Tandembrenner. Durch das Vorsehen der weiteren Drehachse kann nach einer Drehung des Tandembrenners über den roboterseitigen Dreharm der Brenner am Aktionsort für die jeweilige Bearbeitung des Werkstücks ideal ausgerichtet werden.

Zweckmäßigerweise wird die an der Halteeinrichtung angeordnete zusätzliche Drehachse und/oder die Verstellung der Neigung der Halteteile zueinander zentral über die Robotersteuerung gesteuert, sodass der Bearbeitungsvorgang am Werkstück mittels eines einzelnen Steuerprogramms umgesetzt werden kann, welches die Bewegungen aller Achsen des Knickarmroboters sowie der weiteren Drehachse und/oder die Neigung an der Halteeinrichtung steuert.

Der erfindungsgemäße Knickarmroboter kann einen einzelnen Schwenkarm aufweisen, an welchem sich die Handachsen fortsetzen. In einer besonders zweckmäßigen Ausführungsform kann der Roboter als sechsachsiger Industrieroboter ausgebildet sein, bei welchem die sechste Achse die Drehachse darstellt, welche durch den oben stehend angegebenen roboterseitigen Dreharm bereitgestellt wird. In diesem Fall wird erfindungsgemäß der Industrieroboter um eine weitere, sich an die sechste Achse anschließende, siebte Achse erweitert, mit Hilfe dessen beispielsweise der Brenner zur Halteeinrichtung drehbar gelagert werden kann. Darüber hinaus kann mit dem motorisch betriebenen Schwenkgelenk eine achte Roboterachse bereitgestellt werden.

Die beschriebene Halteeinrichtung zur Befestigung des Brenners an der roboterseitigen Drehachse kann unlösbar mit dem roboterseitigen Dreharm verbunden sein. In einer weiteren Ausführungsform kann vorteilhafterweise jedoch auch vorgesehen sein, dass die Halteeinrichtung ein Mittel zum lösbaren Verbinden mit dem Dreharm und ein Mittel zum lösbaren Verbinden mit dem Brenner umfasst, sodass mit Hilfe einer derart gestalteten Halteeinrichtung prinzipiell jeder Knickarmroboter zu einem erfindungsgemäß gestalteten umgerüstet werden kann. Ein solches Befestigungsmittel zum Befestigen der Halteeinrichtung an dem roboterseitigen Dreharm kann beispielsweise ein Befestigungsflansch sein, welcher den Dreharm aufnimmt und an diesem verklemmt wird. Darüber hinaus sind auch andere Befestigungsmittel wie Schraubbolzen etc. einsetzbar.

Die Erfindung wird im Folgenden unter Bezugnahme auf die beiliegenden Zeichnungen durch das Beschreiben einer Ausführungsform erläutert, wobei
- Fig. 1: einen erfindungsgemäß ausgebildeten Knickarmroboter in einer Gesamtansicht,
- Fig. 2: die Handachsen des in Fig. 1 dargestellten Roboters einschließlich eines Brennerhalters,
- Fig. 3: den Brennerhalter in einer Detailansicht,
- Fig. 4: einen Brennerhalter mit zugeordnetem Brenner in einer Explosionsdarstellung,
- Fig. 5: zwei unterschiedliche Brennerstellungen in der Brennerhalterung bei einem Knickwinkel des Brennerhalters von 10°,
- Fig. 6: zwei unterschiedliche Brennerstellungen in dem Brennerhalter bei einem Knickwinkel von 50°,
- Fig. 7: einen in dem Brennerhalter gehaltenen Brenner bei einem Knickwinkel von 10 bzw. 50° der Brennerplatten,
- Fig. 8: zwei unterschiedliche Drehstellungen eines Tandembrenners in der Brennerhalterung,
- Fig. 9: den in Fig. 4 dargestellten Brennerhalter mit einer motorisch betriebenen Verstelleinrichtung in auseinander gebautem Zustand,
- Fig. 10: den in Fig. 9 dargestellten Brennerhalter in zusammengesetztem Zustand und
- Fig. 11: eine weitere Ausführungsform eines Brennerhalters mit starrem Brenner und um den Brenner in einer Kreisbahn geführten Sensoreinrichtung.
zeigt.

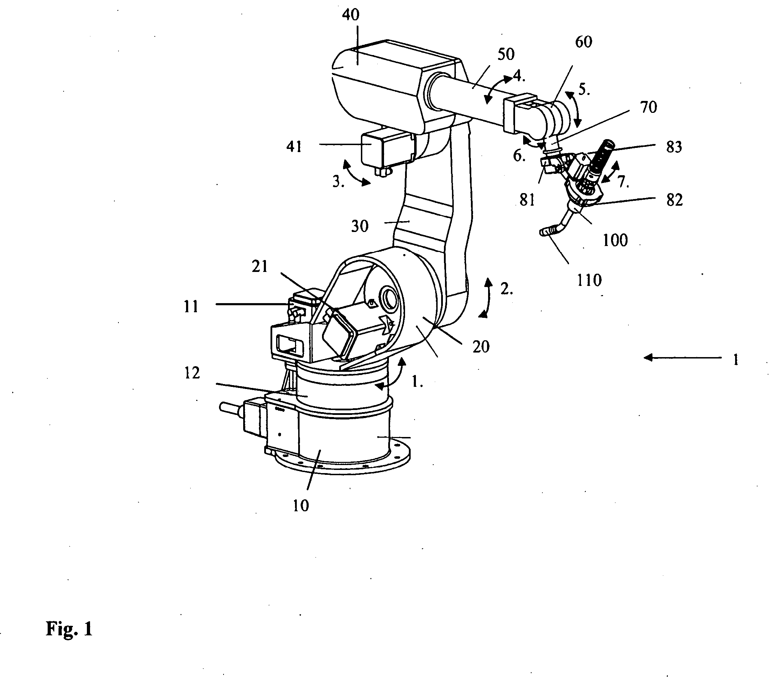

Fig. 1 zeigt einen sechsachsigen Industrieroboter, der erfindungsgemäß zum Tragen eines Brenners 100 ausgebildet ist. Der Roboter ist beispielsweise zum Fügen von Blechteilen in der Automobilindustrie geeignet. Er weist einen zylindrischen, feststehenden Robotersockel 10 auf, an dem sich die erste Drehachse (1.) in Form eines Dreharms 12 abstützt, welcher über den Motor 11 relativ zum Sockel 10 drehbar gelagert ist. Feststehend mit dem Dreharm 12 ist ein Winkelfuß 20 angeordnet, an dem zur Festlegung der zweiten Roboterachse (2.) ein Schwenkarm 30 drehbar angebracht ist, wobei die Schwenkbewegung durch den Motor 21 bereitgestellt wird. Am äußeren Ende des Schwenkarms 30 ist ein Schwenkteil 40 zur Festlegung der dritten Roboterachse (3.) drehbar angebracht, wobei das Schwenkteil relativ zum Schwenkarm über den Motor 41 bewegt wird. In dem dargestellten Bespiel verlaufen die zweite und dritte Roboterachse parallel zueinander. Dabei ist das Schwenkteil 40 seitlich an dem Schwenkarm 30 angebracht. Das Schwenkteil 40 erstreckt sich wiederum in einen Dreharm 50 zur Festlegung der vierten Roboterachse (4.), die senkrecht zu der durch die erste und zweite bzw. dritte Roboterachse definierte Ebene verläuft. Am äußersten Ende des Dreharms 50 schließt sich zur Bereitstellung der fünften Roboterachse (5.) ein Schwenkgelenk 60 an, wobei die Drehachse parallel zur zweiten und dritten Roboterachse angeordnet ist. Endseitig schließt sich zur Bereitstellung der sechsen Roboterachse (6.) ein weiterer Dreharm 70 an, bei welchem die Drehachse wie beim Dreharm 50 parallel zum Arm verläuft.

Endseitig zum Dreharm 70 ist in der erfindungsgemäßen Ausgestaltung ein Brennerhalter 80 vorgesehen, der mit einem roboterseitigen Teil 81 am Dreharm 70 befestigt ist. An dem roboterseitigen Teil ist ein brennerseitiges Teil 82 des Brennerhalters angelenkt, welches den Brenner 100 trägt. Der Brenner 100 weist in der beschriebenen Ausführungsform einen Brennerkopf 110 auf, dessen Achse zur Brennerachse geneigt ist. In der in Fig. 1 dargestellten Ausführungsform ist der Brenner 100 im Brennerhalterteil 82 drehbar gelagert, wobei die Drehachse parallel zur Achse des Schweißbrenners 100 verläuft. Durch den Brennerhalter 81, 82 wird insofern mit der beschriebenen Drehachse ein weiterer Freiheitsgrad in Form einer siebten Achse (7.) bereitgestellt, was auch eine höhere Dynamik beim Anfahren von Schweißpunkten aufgrund der verbesserten Flexibilität der einstellbaren Brennergeometrie ermöglicht.

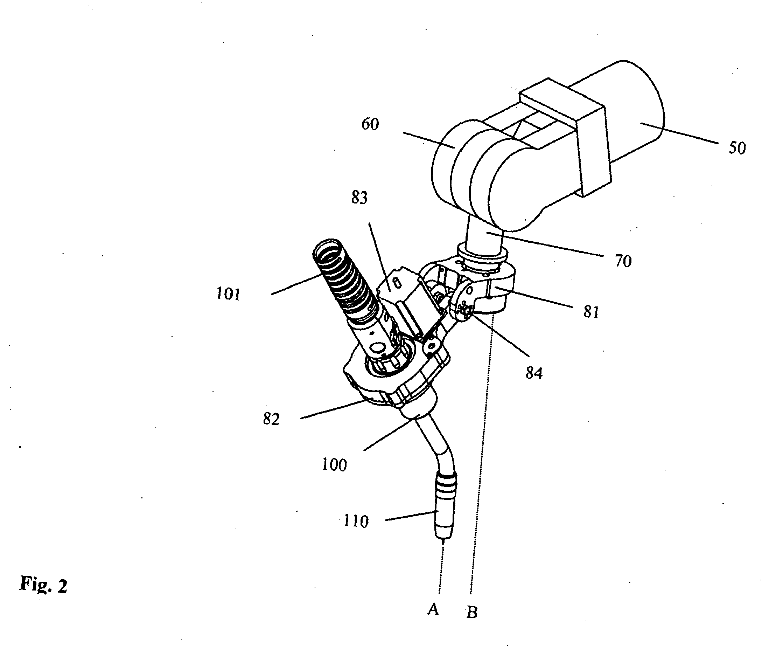

Fig. 2 zeigt in einer Detailansicht die vierte Achse und die Handachsen, d.h. die fünfte und sechste Achse des in Fig. 1 dargestellten Roboters mit an die sechste Achse angeflanschtem Brennerhalter, welcher den Brenner 100 trägt. In der Darstellung ist der Brenner so gedreht ist, dass die Achse A des Brennerkopfs 110 etwa parallel zu der Achse B des Dreharms 70 verläuft, sodass ein Aktionswinkel von 0° eingestellt ist. In der dargestellten Ausführungsform ist der Brennerhalter, bestehend aus dem roboterseitigen Teil 81 und dem brennerseitigen Teil 82 nicht fest, sondern lösbar mit dem Dreharm 70 verbunden. In noch zu beschreibender Weise ist zwischen den Brennerhalterteilen 81, 82 eine feststellbare Drehgelenkverbindung 84 vorgesehen. Durch dieses konstruktive Merkmal erhöht sich die Anpassungsfähigkeit des Schweißroboters an das jeweilige Schweißproblem. Da der Brenner 100 ein vergleichsweise geringes Gewicht aufweist und kaum äußeren Krafteinwirkungen unterworfen ist, kann für die Drehung des Brenners ein vergleichsweise kleiner Motor 83 vorgesehen werden, welcher wie dargestellt auf dem brennerseitigen Teil 82 des Halters befestigt ist.

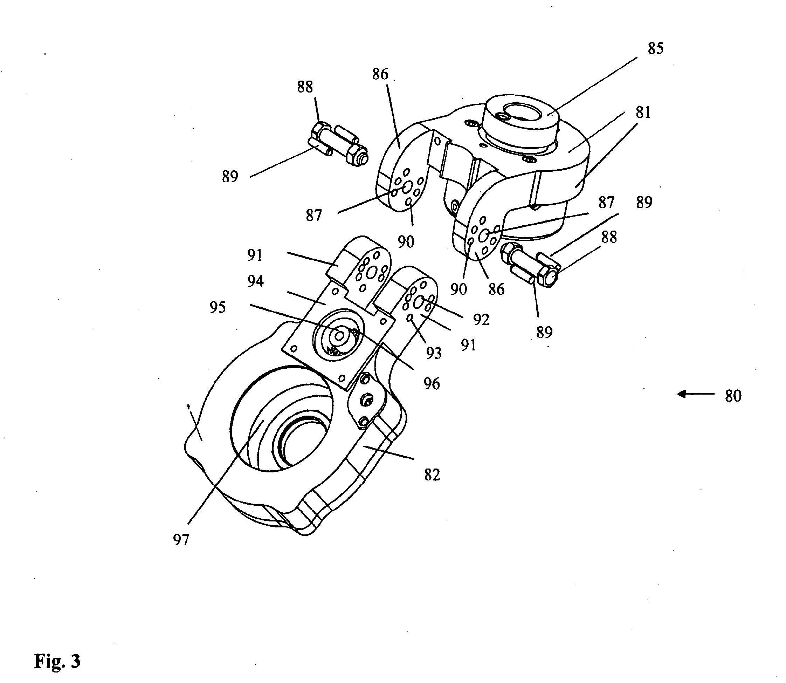

Fig. 3 zeigt den Brennerhalter 80 im Detail. Die beiden Teile 81, 82 sind über eine einstellbare und feststellbare Drehgelenkverbindung miteinander gekoppelt. Hierzu weist der roboterseitige Teil 81 zwei voneinander beabstandete, flügelartige Lagerelemente 86 auf, welche jeweils Durchgangslöcher 87 zur Aufnahme eines Lagerbolzens 88 besitzen. Zum Zusammenwirken mit den Lagerelementen 86 weist das brennerseitige Halterteil 82 auch zwei beabstandete, flügelartige Lagerelemente 91 auf, die wiederum Durchgangslöcher 90 zur Aufnahme der Lagerbolzen 88 besitzen. Der äußere Abstand der Lagerelemente 91 ist an den inneren Abstand der Lagerelemente 86 so angepasst, sodass das Teil 82 mit dessen Lagerelementen in Deckung zu den Lagerelementen 86 des Teils 81 gebracht werden kann, derartig, dass die Durchgangslöcher 87, 92 zur Aufnahme der Lagerbolzen 88 fluchten. Umfänglich zu den Durchgangslöchern 87, 90 sind weitere Durchgangslöcher 90, 93 angeordnet, durch welche jeweils Absteckstifte 89 einführbar sind.

Um eine bestimmte Haltergeometrie einzustellen, werden die beiden Teile 81, 82 in beschriebener Weise bei montierten Lagerbolzen zueinander ausgerichtet und diese Einstellung dann durch Einführen der Absteckstifte fixiert, die sich im eingesteckten Zustand durch beide Lagerelemente 86, 87 erstrecken.

Danach werden die Muttern der Lagerbolzen 88 festgezogen.

Zur Befestigung des Brennerhalters 80 an dem Dreharm 70 umfasst das Halterteil 81 einen Flansch 85, der das Stumpfende des Dreharms 70 aufnimmt und mit diesem verklemmt wird. In der beschriebenen Ausführungsform verläuft die Achse dieses Flansches 85 senkrecht zur Schwenkachse des Halters, welche durch die Durchgangslöcher 90 festgelegt ist. Die am Halter bereitgestellte zusätzliche Drehachse und die roboterseitige Drehachse liegen in einer gemeinsamen Ebenen und schneiden sich in einem spitzen Winkel, der über den Neigungswinkel zwischen den beiden Halterteilen 81, 82 einstellbar ist.

Benachbart zu den Lagerelementen 91 wird eine Standfläche 94 auf dem zweiten Teil 82 der Halterung bereitgestellt, auf welche der nicht dargestellte Motor aufgesetzt wird. Die Motorwelle 95 ist abschnittsweise dargestellt, an deren Ende ein Ritzel 96 angeordnet ist, das in noch zu beschreibender Weise die Lagerung 97 für den Brenner in dem Halteteil 82 dreht, wobei die Drehachse des Brenners in der beschriebenen Ausführungsform parallel zur Drehachse des Motors 83 liegt, siehe Fig. 2. Die am Brennerhalter bereitgestellte weitere Roboterachse ist als Hohlwelle ausgeführt, durch welche sich der Brenner erstreckt, wobei dieser in der beschriebenen Ausführungsform mit dem beweglichen Teil der Hohlwelle verbunden ist. Diese weitere Roboterdrehachse ist zum Drehen des Brenners über einen Winkelbereich von 270° ausgelegt. Prinzipiell sind auch Schwenkbereiche von über 360° möglich, diese werden jedoch durch die resultierende Verdrehung des Schlauchpakets am Brenner beschränkt.

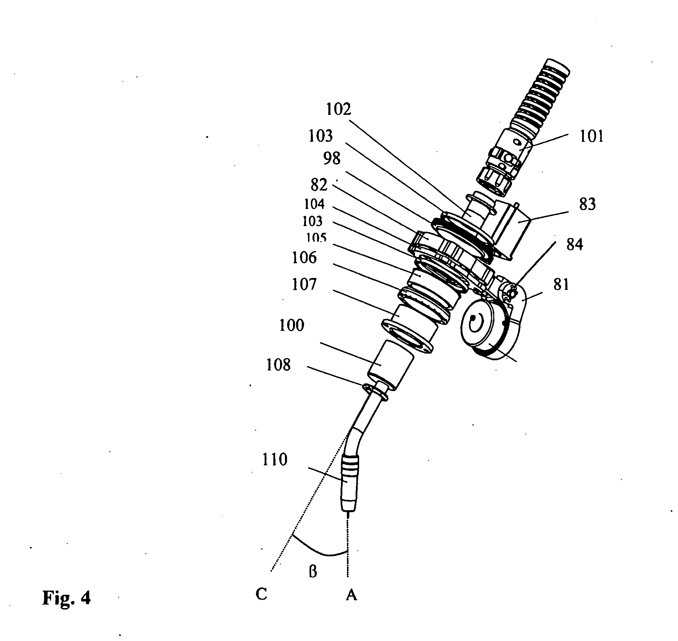

Fig. 4 zeigt den in Fig. 2 dargestellten Brenner einschließlich der Bauteile des brennerseitigen Teils des Halters in einer Explosionsdarstellung. Das roboterseitige Halterteil 81 ist dabei in einer extremen Neigungsposition zu dem brennerseitigen Teil 82 des Halters dargestellt. Über das Schlauchpaket 101 verlaufen zur Klarheit der Darstellung nicht gezeigte Strom-, Gas- und Kühlleitungen zum Brenner 100. Der Antriebsmotor 83 treibt über ein Ritzel, siehe Fig. 2, ein Zahnrad 98 an, das eine Lagerbuchse 105 in Drehung versetzt, in welcher der Schweißbrenner 100 mittels des Befestigungsflansches 106 fixiert ist. Insofern dreht sich der Brenner mit der Lagerbuchse und dem Zahnrad 98, wenn letzteres von dem Motor bewegt wird. Drehbar mit dem Zahnrad 98 ist ferner ein Zwischenstück 102 verbunden, welches sich in einem Formschluss mit dem Schlauchpaket 101 befindet und dieses im Wesentlichen starr zum Schweißbrenner 100 mitdreht. In der Figur dargestellt ist noch eine Isolierhülse 107, welche den Schweißbrenner 100 von den Bauteilen der Hohlachse bzw. der Brennerhalterung isoliert.

In der Figur weist der Brenner 100 einen Brennerkopf 110 auf, dessen Achse A um einen Winkel β gegenüber der Achse C des Brenners 100 geneigt ist. Eine solche Neigung des Brennerkopfs zum eigentlichen Brenner ermöglicht die Einstellung eines bevorzugten Aktionswinkels an dem Werkstück. Dieser Aktionswinkel ist durch das Vorsehen der beschriebenen Drehachse an dem Brennerhalter durch das Drehen des Brenners einstellbar.

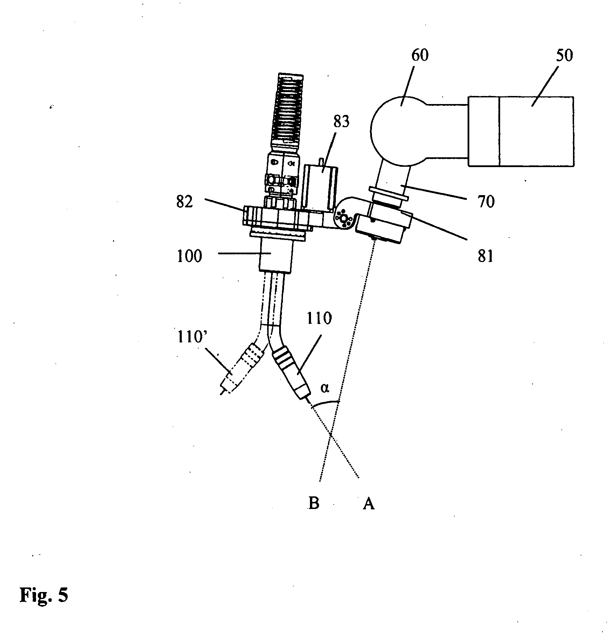

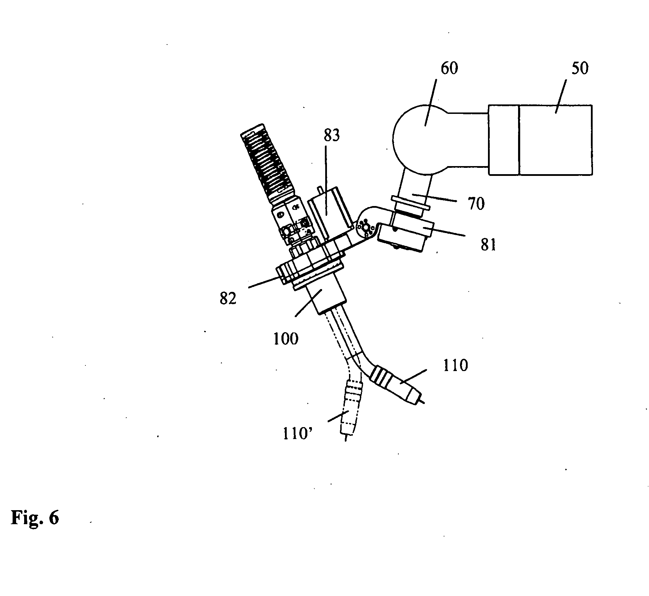

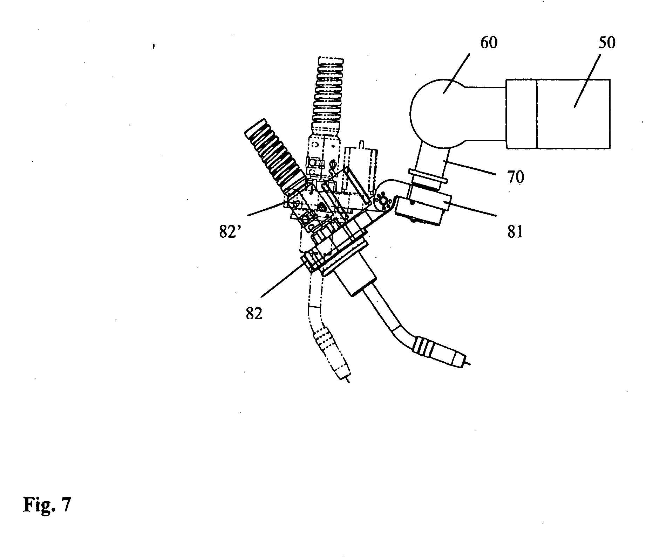

Zur Veranschaulichung sind in den weiteren Figuren 5 bis 7 beispielhafte, einstellbare Brennergeometrien angegeben, wie sie durch den erfindungsgemäß ausgebildeten Knickarmroboter bereitgestellt werden können. Fig. 5 zeigt einen an den Dreharm 70 des Knickarmroboters angebrachten Brennerhalter mit einem Knickwinkel von 10° zwischen den plattenförmigen Teilen 81, 82 des Halters, wobei der Brenner in der Zeichnung in zwei unterschiedlichen Drehstellungen der Hohlwelle dargestellt ist. Die Lage des Brennerkopfs für die erste Hohlwelleneinstellung ist mit dem üblichen Bezugszeichen 110 versehen. Die Achse des Brennerkopfs A und die Achse des Dreharms 70 schneiden sich hier unter einem Aktionswinkel α. Wird nun der Brenner um 180° in seiner Halterung gedreht, wird der Brennerkopf in die mit dem Bezugszeichen 110' versehene und gestrichelt dargestellte Lage versetzt. Ähnliches zeigt Fig. 6 mit einem größeren Knickwinkel zwischen den beiden Teilen des Brennerhalters. Fig. 7 dagegen zeigt zwei Situationen, bei welchen der Brenner nicht gedreht ist, sondern stattdessen der Knickwinkel zwischen den Teilen des Brennerhalters wie oben stehend beschrieben unterschiedlich eingestellt ist. Die unterschiedlichen Lagen des brennerseitigen Teils des Halters sind mit den Bezugszeichen 82 bzw. 82' bezeichnet. Dabei beträgt der Neigungswinkel zwischen den Halterteilen für die Stellung 82' 10 Grad, während der Neigungswinkel zwischen den Halterteilen im anderen Fall auf 50 Grad eingestellt ist.

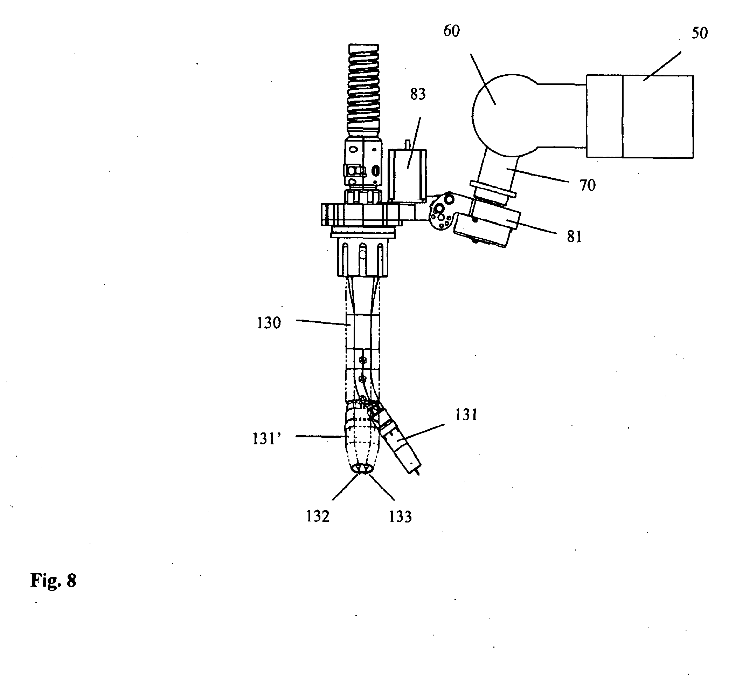

Fig. 8 zeigt eine erfindungsgemäße Halteeinrichtung für einen Knickarmroboter, bei welcher wie in den bisher beschriebenen Ausführungen der Brenner drehbar in der Brennerhalterung gehalten ist, wobei der Brenner selbst als Tandembrenner 130 ausgebildet ist. Wiederum dient in der schon beschriebenen Art und Weise ein Motor 83 zum Drehen des Brenners 130 in der Halteeinrichtung. Der Brennerkopf 131 ist wiederum zur Brennerachse gekrümmt. In der Zeichnung sind zwei verschiedene Stellungen des Brenners dargestellt, wobei die Brennerkopfstellung entsprechend dem Bezugszeichen 131 durch Drehen des Brenners 130 in der Haltevorrichtung um 90° in die Brennerkopfstellung 131' übergeht. Zu erkennen sind auch die beiden Schweißdrähte 132, 133, welche dem jeweiligen Schweißprozess zugeführt werden. Auch in einem nicht dargestellten Fall, bei welchem der Tandemschweißbrennerkopf nicht zur Achse des Schweißbrennerkopfs geneigt wäre, liegt eine Unsymmetrie des Brenners zur Brennerachse vor. Wird insofern ein solcher Brenner durch die Betätigung des Dreharms 70 an eine Schweißfuge herangeführt, kann der Tandembrenner durch die Drehung um die zusätzliche Drehachse am Halter zur Schweißfuge richtig orientiert werden.

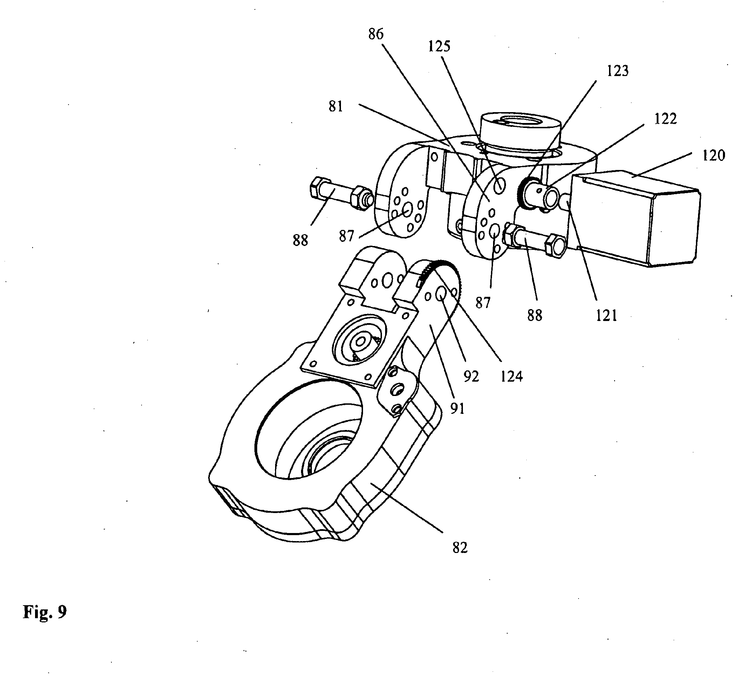

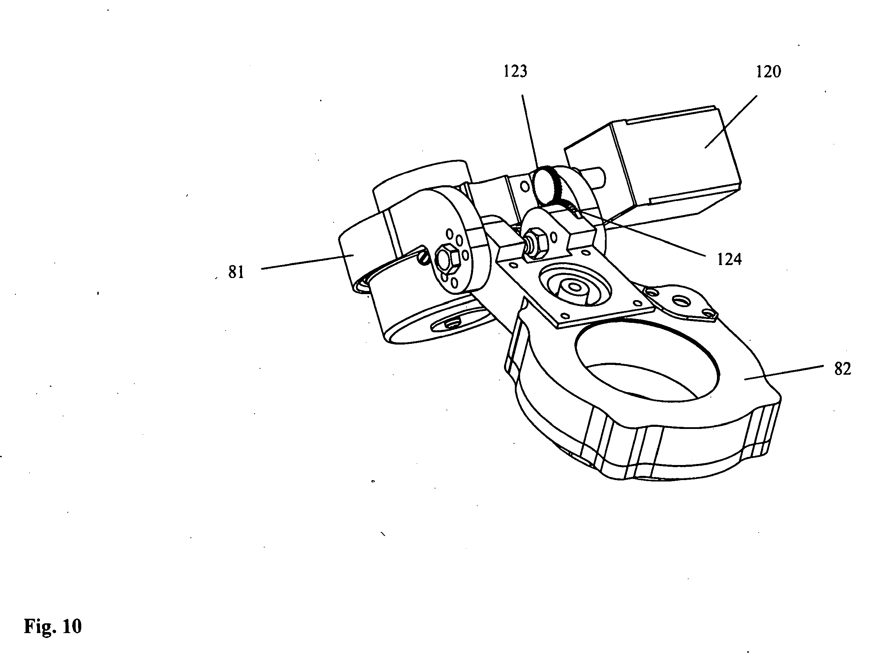

Fig. 9 zeigt eine Halteeinrichtung, die prinzipiell der in Fig. 2 gezeigten entspricht. Im Unterschied zu der vorhergehenden, zweigeteilten Haltevorrichtung ist die in Fig. 9 dargestellte so weitergebildet, dass die beiden Halteteile 81, 82 um die von den Durchgangsöffnungen 87 definierte Schwenkachse motorisch zueinander geschwenkt werden können. Hierzu weist das flügelartige Lagerelement 91 des Halterteils 82 ein feststehendes Teilritzel 124 auf, das zentrisch zur Durchgangsöffnung 92 angeordnet ist. Dieses Teilritzel kämmt im zusammengebauten Zustand mit einem Ritzel 123, das in dem Halteteil 81 drehbar gelagert ist. Dieses Ritzel ist am Ende einer Hohlwelle 122 angebracht, auf die der Wellenstumpf 121 eines Motors 120 aufsteckbar ist und mit diesem verklemmbar ist. Die Hohlwelle 122 erstreckt sich durch ein Loch 125 in dem als Flügel ausgebildeten Lagerelement 86. Es sei darauf hingewiesen, dass zur Klarheit der Darstellung die Hohlwelle 122 mit dem Ritzel 123 an der Außenseite des Lagerelements 86 angegebene ist, im zusammengesetzten Zustand befindet sich dass Ritzel 123 jedoch an der Innenseite des Lagerelements 86, siehe Fig. 10.

In der in Fig. 9 dargestellten Ausführungsform erstrecken sich wiederum die Lagerbolzen 88 durch die Durchgangsöffnung 92, 87, d.h. sie legen die Schwenkachse für die motorisch betriebene Schwenkbewegung zwischen den beiden Halterteilen 81, 82 fest. Die Schrauben sind hier jedoch nicht festgezogen, sodass die aneinander liegenden Lagerflügel 91, 86 zueinander verschwenkbar sind, siehe Fig. 10. Fig. 10 zeigt auch das Kämmen der Ritzel 123, 124.

In einer nicht dargestellten Ausführungsform werden die beiden Halteteile zueinander mittels eines Direktantriebs verschwenkt.

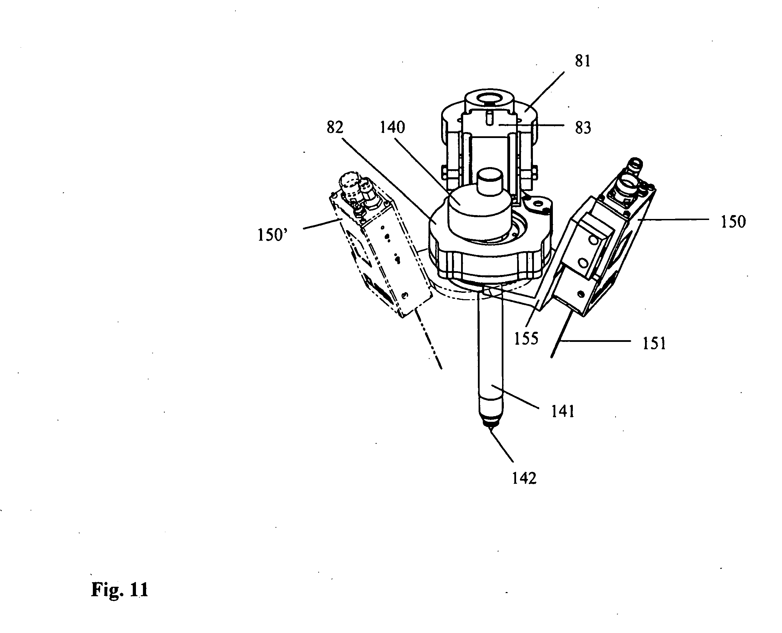

Fig. 11 zeigt eine weitere Ausführungsform der erfindungsgemä-βen Halteeinrichtung. Diese ist im Wesentlichen wie beispielsweise die in Fig. 3 gezeigte ausgebildet, d.h. mit manuell verstellbarem Schwenkwinkel, wobei ein Motor 83 vorgesehen ist, eine nicht sichtbare Hohlwelle im zweiten Halterteil 82 anzutreiben. Im Gegensatz zu den bislang beschriebenen Ausführungsformen ist jedoch der Brenner 140, welche hier einen geraden Brennerkopf 141 umfasst, starr mit dem zweiten Halterteil 82 verbunden. Von der Hohlwelle angetrieben ist ein Sensorhalter 155, welcher radial beabstandet von der Drehachse der Hohlwelle einen Lasersensor 150 trägt, sodass der Lasersensor in einer Kreisbewegung um den Brenner 140 herumgeführt werden kann. In der Figur sind zwei unterschiedliche Stellungen 150, 150' des Lasersensors dargestellt, wobei die mit dem Bezugszeichen 150 angegebene Stellung durch eine Drehung der siebten Roboterachse um etwa 270° in die Stellung 150' übergeht. Dieser Lasersensor kann von der Robotersteuerung verwendet werden, um die Schweißfuge zu erfassen und insofern zu ermitteln, ob der aus dem Schweißbrennerkopf 141 vorgeschobene Schweißdraht 142 in die vorgesehene Schweißfuge geschoben wird. Ergeben sich beispielsweise durch Toleranzen der Werkstücke unplanmäßige Schweißfugen, kann der Schweißbrenner durch die Betätigung zumindest eines der Freiheitsgrade des Knickarmroboters nachgefahren werden.

In einer nicht dargestellten Ausführungsform, bei welcher der Schweißbrenner wie in Fig. 11 dargestellt zur Halteeinrichtung festgehalten wird, ist der Schweißbrenner als WIG-Schweißbrenner ausgebildet und das um diesen herumgeführte Nebenaggregat als Drahtvorschubeinrichtung, mit welcher der Schmelzdraht in die Schweißfuge eingebracht wird.

### Bezugszeichenliste

- 1: Knickarmroboter
- 10: Robotersockel
- 11: Antrieb, erste Achse
- 12: Dreharm, erste Achse
- 20: Winkelfuß
- 30: Schwenkarm
- 31: Antrieb, zweite Achse
- 40: Schwenkteil
- 41: Antrieb, dritte Achse
- 50: Dreharm, vierte Achse
- 60: Schwenkgelenk
- 70: Dreharm, sechste Achse
- 80: Brennerhalter
- 81: Roboterseitiges Teil des Brennerhalters
- 82, 82': Brennerseitiges Teil des Brennerhalters
- 83: Motor, siebte Achse
- 84: Feststellbare Drehgelenkverbindung
- 85: Befestigungsflansch
- 86: Lagerelement
- 87: Durchgangsloch
- 88: Lagerbolzen
- 89: Absteckstift
- 90: Durchgangsloch
- 91: Lagerelement
- 92: Durchgangsloch
- 93: Durchgangsloch
- 94: Standfläche
- 95: Antriebswelle des Motors
- 96: Ritzel
- 97: Brennerlager
- 98: Zahnrad
- 100: Schweißbrenner
- 101: Schlauchpaket
- 102: Zwischenstück
- 103: Ringlager
- 104: Lagerdeckel
- 105: Lagerbuchse
- 106: Befestigungsflansch
- 107: Isolierhülse
- 108: Klemmmutter
- 110: Brennerkopf
- 120: Motor, achte Achse
- 121: Motorwellenstumpf
- 122: Hohlwelle
- 123: Antriebsritzel
- 124: Abtriebsritzel
- 125: Durchgangsloch
- 130: Tandembrenner
- 131: Tandembrennerkopf
- 131': Tandembrennerkopf
- 132, 133: Schweißdraht
- 140: Brenner
- 141: Brennerkopf
- 142: Schweißdraht
- 150, 150': Lasersensor
- 151: Laserstrahl
- 155: Sensorhalter
- A: Brennerkopfachse
- B: Drehachse
- C: Brennerachse
- β: Winkel zwischen Brennerkopf und Brennerachse
- α: Aktionswinkel

## Patentansprüche

1. Knickarmroboter (1) mit einem Dreharm (70), der eine Drehachse (6) definiert, welcher eine Haltereinrichtung (80) trägt, die sich vom Dreharm nach außen zur Seite erstreckt, wobei die Halteeinrichtung in einem ersten, dreharmnahen Abschnitt (81) an dem Dreharm befestigt ist und in einem zum roboterseitigen Dreharm seitlich entfernten, zweiten Abschnitt (82) einen Brenner wie einen Schweißbrenner (100, 130, 140) mit einem Brennerkopf (110, 131, 141) zur Bearbeitung eines Werkstückes trägt, und wobei brennerseitig an dem zweiten Abschnitt (82) der Halteeinrichtung eine weitere Drehachse (7) vorgesehen ist, **dadurch gekennzeichnet, dass** eine Schwenkachse an der Halteeinrichtung (80) vorgesehen ist zur Festlegung einer vorgegebenen Neigung zwischen dem ersten und dem zweiten Abschnitt (81; 82) der Halteeinrichtung, sowie eine lösbare Sperrvorrichtung zur Feststellung eines eingestellten Neigungswinkels zwischen dem ersten und zweiten Abschnitt (81; 82), wobei die Schwenkachse senkrecht zur Ebene verläuft, welche durch die beiden Drehachsen aufgespannt ist.

2. Knickarmroboter nach Anspruch 1, **dadurch gekennzeichnet, dass** der Brenner (100, 130) zur Halteeinrichtung (80) um die weitere Drehachse drehbar gelagert ist.

3. Knickarmroboter nach Anspruch 1 oder 2, **dadurch gekennzeichnet, dass** die roboterseitige Drehachse (B) und die brennerseitige Drehachse (C) einen spitzen Winkel zueinander bilden.

4. Knickarmroboter nach Anspruch 1, 2, oder 3, **dadurch gekennzeichnet, dass** der Brennerkopf (110, 131) zur Brennerachse (C) geneigt ist.

5. Knickarmroboter nach einem der Ansprüche 1 bis 4, **dadurch gekennzeichnet, dass** die Halteeinrichtung (80) in dem ersten Abschnitt (81) starr an dem roboterseitigen Dreharm befestigt ist und sich nach außen erstreckt und seitlich zur roboterseitigen Drehachse in den zweiten Abschnitt (82) übergeht, welcher zum ersten Abschnitt geneigt verläuft.

6. Knickarmroboter nach einem der Ansprüche 1 bis 5, **dadurch gekenntzeichnet, dass** sich der erste Abschnitt (81) der Halteeinrichtung im Wesentlichen senkrecht zum roboterseitigen Dreharm (70) erstreckt.

7. Knickarmroboter nach einem der Ansprüche 1 bis 6, **dadurch gekennzeichnet, dass** die Halteeinrichtung plattenförmig ausgebildet ist.

8. Knickarmroboter nach einem der Ansprüche 1 bis 6, **dadurch gekennzeichnet, dass** die Brennerachse (C) etwa senkrecht zum zweiten Abschnitt (82) der Halteeinrichtung verläuft.

9. Knickarmroboter nach einem der Ansprüche 1 bis 7, **dadurch gekennzeichnet,dass** die weitere Drehachse (C) durch eine Hohlwelle festgelegt ist, durch welche sich der Brenner erstreckt.

10. Knickarmroboter nach Anspruch 9, **dadurch gekennzeichnet, dass** der Brenner (100, 130) starr mit der Hohlwelle verbunden ist und von dieser zur Halteeinrichtung (81, 82)gedreht wird.

11. Knickarmroboter nach Anspruch 9, **dadurch gekennzeichnet, dass** der Brenner (140) etwa zentrisch in der Hohlwelle angeordnet ist, wobei der Brenner starr mit der Halteeinrichtung verbunden ist und an der Hohlwelle ein Nebenaggregat wie eine Sensoreinrichtung (150) oder eine Drahtvorschubeinrichtung befestigt ist, das von der Hohlwelle um den Brenner herum geführt ist.

12. Knickarmroboter nach einem der Ansprüche 1 bis 11, **dadurch gekennzeichnet, dass** der zweite Abschnitt (82) der Halteeinrichtung zum ersten Abschnitt (81) um etwa 10 Grad in Richtung zum Brennerkopf geneigt ist.

13. Knickarmroboter nach einem der Ansprüche 1 bis 12, **dadurch gekennzeichnet, dass** die Achse des Brennerkopfes zur Brennerachse etwa um 35 Grad geneigt ist.

14. Knickarmroboter nach einem der Ansprüche 1 bis 13, **dadurch gekennzeichnet, dass** die Achse des Brennerkopfes zur Brennerachse und der zweite Abschnitt der Halteeinrichtung zum ersten Abschnitt jeweils etwa um 22,5 Grad geneigt sind.

15. Knickarmroboter nach einem der Ansprüche 1 bis 14, **dadurch gekennzeichnet, dass** eine Verstelleinrichtung vorgesehen ist zum Verstellen der Neigung zwischen erstem und zweitem Abschnitt der Halteeinrichtung.

16. Knickarmroboter nach einem der Ansprüche 1 bis 15, **dadurch gekennzeichnet, dass** die Verstelleinrichtung einen Antrieb (120) umfasst zum motorischen Verstellen der Neigung zwischen erstem und zweitem Abschnitt (81, 82) der Halteeinrichtung (80).

17. Knickarmroboter nach Anspruch 16, **dadurch gekennzeichnet, dass** einer der Abschnitte (82) der Halteeinrichtung ein feststehendes Ritzelelement (124) aufweist, das mit einem angetriebenen, an einem anderen Abschnitt (81) der Halteeinrichtung angeordneten Ritzel (123) kämmt, wobei die Schwenkachse zentrisch durch das Ritzelelement (124) verläuft.

18. Knickarmroboter nach Anspruch 16, **dadurch gekennzeichnet, dass** ein Direktantrieb vorgesehen ist, welcher die Neigung eines der Abschnitte zu einem anderen Abschnitt der Halteeinrichtung verstellt.

19. Knickarmroboter nach einem der Ansprüche 1 bis 18, **dadurch gekennzeichnet, dass** der Brenner einen Tandembrennerkopf (130) aufweist.

20. Knickarmroboter nach einem der Ansprüche 1 bis 19, **dadurch gekennzeichnet, dass** der Brenner einen MIG/MAG-Brenner, einen WIG-Brenner, eine Laser-Brenner und/oder einen Plasma-Brenner aufweist.

21. Halteeinrichtung (80) zur Verwendung an einem Knickarmroboter nach einem der Ansprüche 1 bis 20, zur Befestigung eines Brenners an einem roboterseitigen Dreharm (70), wobei die Haltereinrichtung in einem ersten Abschnitt (81) ein Mittel zum lösbaren Befestigen der Halteeinrichtung an dem Dreharm und in einem zweiten, zum ersten beabstandeten Abschnitt (82) ein Mittel zum lösbaren Befestigen des Brenners an der Haltevorrichtung aufweist, **dadurch gekennzeichnet, dass** eine Schwenkachse an der Halteeinrichtung (80) vorgesehen ist zur Festlegung einer vorgegebenen Neigung zwischen dem ersten und dem zweiten Abschnitt (81; 82) der Halteeinrichtung, sowie eine lösbare Sperrvorrichtung zur Feststellung eines eingestellten Neigungswinkels zwischen dem ersten und zweiten Abschnitt (81; 82), wobei die Schwenkachse senkrecht zur Ebene verläuft, welche durch die beiden Drehachsen aufgespannt ist.

## Claims

1. Jointed arm robot (1) having a rotary arm (70) defining a rotary axis (6), said robot carrying a holding device (80) laterally outwardly extending from the rotary arm, which holding device is fixed to the rotary arm in a first section (81) close to the rotary arm and carries a burner such as a welding torch (100, 130, 140) comprising a burner head (110, 131, 141) for processing a work piece in a second section (82) laterally spaced from the robot-side rotary arm, wherein a further rotary axis (7) is provided on the burner-side on the second section (82) of the holding device, **characterized in that** a pivot axis is provided on the holding device (80) intended for fixing a predetermined inclination between the first and the second sections (81; 82) of the holding device as well as releasable locking device for fixing an adjusted angle of inclination between the first and second sections (81; 82), with the pivot axis running perpendicularly to the plane that is formed by the two rotary axes.

2. Jointed arm robot according to claim 1, **characterized in that** the burner (100, 130) is supported for rotation about the additional rotary axis with respect to the holding device (80).

3. Jointed arm robot according to claim 1 or 2, **characterized in that** the robot-side rotary axis (B) and the burner-side rotary axis (C) form an acute angle with respect to each other.

4. Jointed arm robot according to claim 1, 2 or 3, **characterized in that** the burner head (110, 132) is inclined with respect to the burner axis (C).

5. Jointed arm robot according to one of the claims 1 to 4, **characterized in that** the holding device (80) is rigidly fixed to the robot-side rotary arm in said first section (81) and extends outwardly and merges into the second section (82) which is inclined with respect to the first section, laterally with respect to the robot-side rotary axis.

6. Jointed arm robot according to one of the claims 1 to 5, **characterized in that** the first section (81) of the holding device extends substantially perpendicularly to the robot-side rotary arm (70).

7. Jointed arm robot according to one of the claims 1 to 6, **characterized in that** holding device is formed in plate-like fashion.

8. Jointed arm robot according to one of the claims 1 to 6, **characterized in that** the burner axis (C) extends approximately perpendicularly to the second section (82) of the holding device.

9. Jointed arm robot according to one of the claims 1 to 7, **characterized in that** said further rotary axis (C) is fixed by a hollow shaft through which the burner extends.

10. Jointed arm robot according to claim 9, **characterized in that** the burner (100, 130) is rigidly connected to the hollow shaft and is turned towards the holding device (81, 82) by said hollow shaft.

11. Jointed arm robot according to claim 9, **characterized in that** the burner (140) is approximately centrally arranged inside the hollow shaft, the burner being rigidly connected to the holding device and an additional unit such as a sensor device (150) or a wire feeding device being fixed to the hollow shaft and guided around the burner by said hollow shaft.

12. Jointed arm robot according to one of the claims 1 to 11, **characterized in that** the second section (82) of the holding device is inclined with respect to the first section (81) by approx 10 degrees in a direction towards the burner head.

13. Jointed arm robot according to one of the claims 1 to 12, **characterized in that** the axis of the burner head is inclined with respect to the burner axis by approx 35 degrees.

14. Jointed arm robot according to one of the claims 1 to 13, **characterized in that** the axis of the burner head is inclined with respect to the burner axis and the second section of the holding device is inclined with respect to the first section by 22.5 degrees, respectively.

15. Jointed arm robot according to one of the claims 1 to 14, **characterized in that** an adjustment device is provided for adjusting the inclination between the first and the second section of the holding device.

16. Jointed arm robot according to one of the claims 1 to 15, **characterized in that** the adjustment device comprises a drive unit (120) for the motor-driven adjustment of the inclination between the first and the second section (81, 82) of the holding device (80).

17. Jointed arm robot according to claim 16, **characterized in that** one of the sections (82) of the holding device includes a fixed pinion element (124) meshing with a driven pinion (123) arranged on a different section (81) of the holding device, the pivot axis passing centrically through the pinion element (124).

18. Jointed arm robot according to claim 16, **characterized in that** a direct drive unit is provided which adjusts the inclination of a section with respect to a different section of the holding device.

19. Jointed arm robot according to one of the claims 1 to 18, **characterized in that** the burner includes a tandem burner head (130).

20. Jointed arm robot according to one of the claims 1 to 19, **characterized in that** the burner comprises a MIG/MAG burner, a WIG burner, a laser-type burner and/or a plasma-type burner.

21. Holding device (80) for use in jointed arm robot according to one of the claims 1 to 20, intended for fixing a burner to a robot-side rotary arm (70), said holding device including in a first section (81) a means for detachably fixing the holding device to the rotary arm and in a second section (82) which is spaced from the first section, a means for detachably fixing a burner to the holding device, **characterized in that** a pivot axis is provided on the holding device (80) intended for fixing a predetermined inclination between the first and the second sections (81; 82) of the holding device as well as releasable locking device for fixing an adjusted angle of inclination between the first and second sections (81; 82), with the pivot axis running perpendicularly to the plane that is formed by the two rotary axes.

## Revendications

1. Robot à bras articulé (1) comprenant un bras rotatif (70) qui définit un axe de rotation (6), robot à bras articulé qui porte un dispositif de support (80) qui s'étend du bras rotatif vers l'extérieur et vers le côté, dans lequel le dispositif de support est fixé sur le bras rotatif dans un premier tronçon (81) proche du bras rotatif et porte dans un second tronçon (82) loin du bras rotatif du côté de robot un chalumeau tel qu'un chalumeau de soudage (100, 130, 140) qui comprend une tête de soudage (110, 131, 141) pour le traitement d'un ouvrage et dans lequel un autre axe de rotation (7) est prévu sur le second tronçon (82) du dispositif de support du côté de chalumeau, **caractérisé en ce que** un axe de pivotement est prévu sur le dispositif de support (80) et est destiné à la fixation d'une inclinaison prédéterminée entre le premier et le second tronçons (81; 82) du dispositif de support et aussi un dispositif de blocage apte à être débloqué et destiné à la fixation d'un angle d'inclinaison ajusté entre le premier et le second tronçons (81; 82), l'axe de pivotement s'étendant perpendiculairement au plan formé par les deux axes de rotation.

2. Robot à bras articulé selon la revendication 1, **caractérisé en ce que** le chalumeau (100, 130) est pivotante autour l'autre axe de rotation par rapport au dispositif de support (80).

3. Robot à bras articulé selon la revendication 1 ou 2, **caractérisé en ce que** l'axe de rotation (B) du côté de robot et l'axe de rotation (C) du côté de chalumeau forment un angle aigu l'un par rapport à l'autre.

4. Robot à bras articulé selon la revendication 1, 2 ou 3, **caractérisé en ce que** la tête du chalumeau (110, 131) est inclinée par rapport à l'axe du chalumeau (C).

5. Robot à bras articulé selon l'une des revendications 1 à 4, **caractérisé en ce que** le dispositif de support (80) dans le premier tronçon (81) est fixé de façon rigide sur le bras rotatif du côté de robot et s'étend vers l'extérieur et passe au second tronçon (82) qui s'étend de façon incliné par rapport au premier tronçon, latéralement par rapport à l'axe de rotation du côté de robot.

6. Robot à bras articulé selon l'une des revendications 1 à 5, **caractérisé en ce que** le premier tronçon (81) du dispositif de support s'étend essentiellement vers le bras rotatif (70) du côté de robot.

7. Robot à bras articlé selon l'une des revendications 1 à 6, **caractérisé en ce que** le dispositif de support est en forme de plaque.

8. Robot à bras articulé selon l'une des revendications 1 à 6, **caractérisé en ce que** l'axe de chalumeau (C) s'étend sensiblement perpendiculairement par rapport au second tronçon (82) du dispositif de support.

9. Robot à bras articulé selon l'une des revendications 1 à 7, **caractérisé en ce que** l'axe de rotation ultérieur (C) est fixé au moyen d'un arbre creux au travers duquel s'étend le chalumeau.

10. Robot à bras articulé selon la revendication 9, **caractérisé en ce que** le chalumeau (100, 130) est relié de façon rigide à l'arbre creux et est tourné par le biais de l'arbre creux vers le dispositif de support (81, 82).

11. Robot à bras articulé selon la revendication 9, **caractérisé en ce que** le chalumeau (140) est disposé sensiblement centralement dans l'arbre creux, le chalumeau étant relié de façon rigide au dispositif de support et une unité secondaire tel qu'un dispositif de capteur (150) ou un dispositif d'alimentation de fil étant fixés sur l'arbre creux, l'unité secondaire étant guidée autour de chalumeau par le biais de l'arbre creux.

12. Robot à bras articulé selon l'une des revendications 1 á 11, **caractérisé en ce que** le second tronçon (82) du dispositif de support est incliné par rapport au premier tronçon (81) et vers la tête du chalumeau à 10 degrés environ.

13. Robot à bras articulé selon l'une des revendications 1 à 12, **caractérisé en ce que** l'axe de tête de chalumeau est incliné par rapport à l'axe de chalumeau à 35 degrés environ.

14. Robot à bras articulé selon l'une des revendications 1 à 13, **caractérisé en ce que** l'axe de tête de chalumeau est incliné par rapport à l'axe de chalumeau et le second tronçon du dispositif de support est incliné par rapport au premier tronçon respectivement à 22,5 degrés environ.

15. Robot à bras articulé selon l'une des revendications 1 à 14, **caractérisé en ce qu'**est prévu un dispositif d'ajustage destiné à ajuster l'inclinaison entre le premier et le second tronçon du dispositif de support.

16. Robot à bras articulé selon l'une des revendications 1 à 15, **caractérisé en ce que** le dispositif d'ajustage comprend un dispositif de commande (120) pour l'ajustage motrice de l'inclinaison entre le premier et le second tronçon (81, 82) du dispositif de support (80).

17. Robot à bras articulé selon la revendication 16, **caractérisé en ce que** l'un des tronçons (82) du dispositif de support comporte un élément de pignon fixe (124) qui engrène avec un pignon entraîné (123) disposé sur un autre tronçon (81) du dispositif de support, l'axe de pivotement s'étendant centralement au travers de l'élément de pignon (124).

18. Robot à bras articulé selon la revendication 16, **caractérisé en ce qu'**est prévu un dispositif de commande directe qui ajuste l'inclinaison de l'un des tronçons par rapport à un autre tronçon du dispositif de support.

19. Robot à bras articulé selon l'une des revendications 1 à 18, **caractérisé en ce que** le chalumeau comporte une tête tandem de chalumeau (130).

20. Robot à bras articulé selon l'une des revendications 1 à 19, **caractérisé en ce que** le chalumeau comporte un chalumeau MIG/MAG, un chalumeau WIG, un chalumeau à laser et/ou un chalumeau à plasma.

21. Dispositif de support (80) destiné à l'usage sur un robot à bras articulé selon l'une des revendications 1 à 20, destiné à la fixation d'un chalumeau sur un bras rotatif (70) du côté de robot, le dispositif de support comportant dans un premier tronçon (81) un moyen pour fixer le dispositif de support de façon détachable sur le bras rotatif et dans un second tronçon (82) écarté du premier tronçon un moyen pour fixer le chalumeur de façon détachable sur le dispositif de support, **caractérisé en ce que** un axe de pivotement est prévu sur le dispositif de support (80) et est destiné à la fixation d'une inclinaison prédéterminée entre le premier et le second tronçons (81; 82) du dispositif de support et aussi un dispositif de blocage apte à être débloqué et destiné à la fixation d'un angle d'inclinaison ajusté entre le premier et le second tronçons (81 ; 82), l'axe de pivotement s'étendant perpendiculairement au plan formé par les deux axes de rotation.
